# EUROPEAN PATENT APPLICATION

(11) **EP 1 865 680 A1**
(43) Date of publication of application: **12.12.2007**
(21) Application number: 06115251.8
(22) Date of filing: 09.06.2006
(51) Int. Cl.: H04L 29/06, G06F 21/00

(54) **Remote storage of a markup language document for access by sets of wireless computing devices**

(71) Applicant: Nextair Corporation, Waterloo, ON N2L 3W8 (CA)
(72) Inventor: Neil, Tim, Mississauga Ontario L5M 7H2 (CA)
(74) Representative: Rickard, David John

(57) **Abstract**

A user may be presented with a set of groups at a first computing device. Each group is for containing a set of markup language documents to which access by wireless computing devices is granted or denied as a whole. The markup language documents may define wireless computing device operation for presenting data from a remote application, and may be generated by the first computing device. A user selection of one or more groups to which a markup language document is to be added is made. The selection is communicated to a remote computing device along with the markup language document. The remote computing device may add the markup language document to each group of the user selection, for example by updating a database.

## Description

The present disclosure pertains to markup language documents, and more particularly to the remote storage of markup language documents for access by sets of wireless computing devices.

A markup language document, such as a text file containing Extensible Markup Language (XML), may be used to define the operation of a wireless computing device for presenting data from a server-based application. For example, co-pending U.S. patent application 09/846,781 entitled "SOFTWARE, DEVICES AND METHODS FACILITATING EXECUTION OF SERVER-SIDE APPLICATIONS AT MOBILE DEVICES", published under publication no. 2003/0060896, describes application definition files which serve this purpose.

It may be desirable to conveniently transmit markup language documents for storage at a server within such a system, for access by wireless computing devices, from another computing device, such as a computing device at which the documents are created. More generally, it may be desirable to store markup language documents at a remote server for wireless computing device access in other types of systems.

### BRIEF DESCRIPTION OF THE DRAWINGS

In the figures which illustrate example embodiments:

FIG. 1 is a schematic diagram illustrating an exemplary system for presenting data from a server-based application at a wireless computing device;

FIG. 2 is a schematic diagram illustrating a transaction server of FIG. 1 in greater detail;

FIG. 3 is a schematic diagram illustrating a rapid application development tool of FIG. 1 in greater detail;

FIG. 4 is a schematic diagram illustrating an exemplary format for a markup language document employed by the system of FIG. 1;

FIGS. 5 and 6 are flowcharts illustrating operation at the rapid application development tool of FIG. 3 and the transaction server of FIG. 2, respectively;

FIG. 7 is a schematic diagram illustrating a database maintained at the transaction server of FIG. 1;

FIG. 8 is a diagram illustrating a user interface component displayed on display of the rapid application development tool of FIG. 3; and

FIG. 9 is a schematic diagram illustrating an updated database at the transaction server of FIG. 1.

### DESCRIPTION OF PREFERRED EMBODIMENTS

The embodiment described herein preferably pertains to the remote storage of markup language documents for access by sets of wireless computing devices. The embodiment may be used in conjunction with a system for presenting data from a server-based application at a wireless computing device, as described in U.S. Patent Publication No. 2003/0060896.

In one aspect of the below-described embodiment, there is preferably provided a computer-implemented method comprising: receiving a user request to store at a remote computing device a markup language document; presenting to a user a set of groups, each of the groups for containing a set of markup language documents to which access by wireless computing devices is granted or denied as a whole; receiving a user selection of one or more of the groups to which the markup language document is to be added; and communicating the user selection and the markup language document to the remote computing device.

In another aspect of the below-described embodiment, there is preferably provided a computer-implemented method comprising: providing to a remote computing device an indication of a set of groups, each of the groups for containing a set of markup language documents to which access by wireless computing devices is granted or denied as a whole; receiving from the remote computing device: a markup language document; and a selection of one or more of the groups to which the markup language document is to be added; and adding the markup language document to each group of the selection.

In yet another aspect of the below-described embodiment, there is preferably provided a machine-readable medium comprising: machine-executable code for receiving a user request to store at a remote computing device a markup language document; machine-executable code for presenting to a user a set of groups, each of the groups for containing a set of markup language documents to which access by wireless computing devices is granted or denied as a whole; machine-executable code for receiving a user selection of one or more of the groups to which the markup language document is to be added; and machine-executable code for communicating the user selection and the markup language document to the remote computing device.

In yet another aspect of the below-described embodiment, there is preferably provided a machine-readable medium comprising: machine-executable code for providing to a remote computing device an indication of a set of groups, each of the groups for containing a set of markup language documents to which access by wireless computing devices is granted or denied as a whole; machine-executable code for receiving from the remote computing device: a markup language document; and a selection of one or more of the groups to which the markup language document is to be added; and machine-executable code for adding the markup language document to each group of the selection.

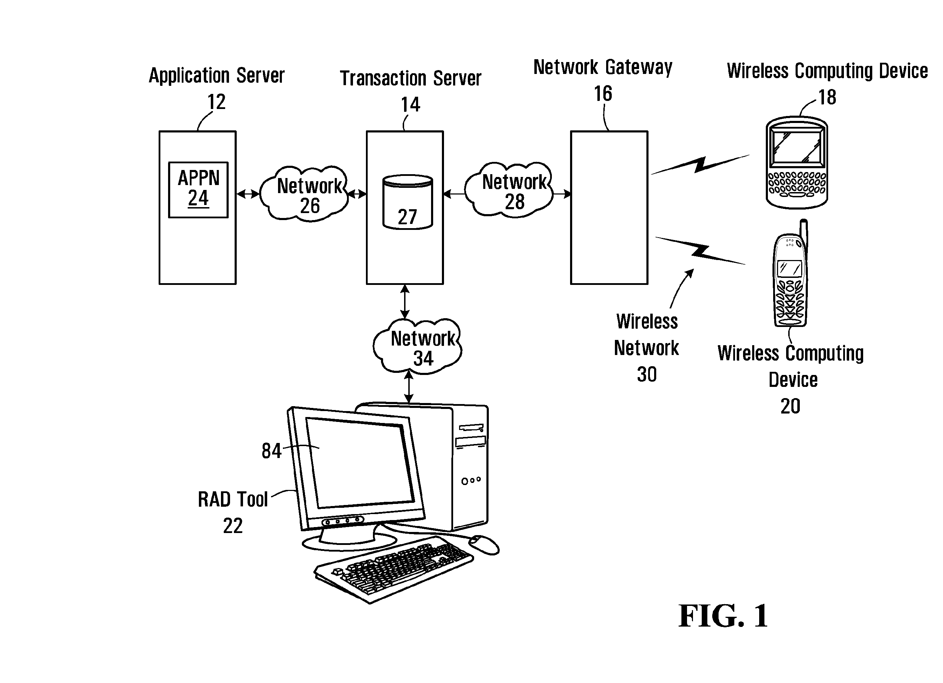

FIG. 1 is a schematic diagram illustrating an exemplary system 10 for presenting data from a server-based application at a wireless computing device. The system is an enhancement of the system described in U.S. Patent Publication No. 2003/0060896 (referenced above) defining a novel approach for remotely storing markup language documents to transaction server within the system 10 for access by wireless computing devices, as described hereinafter.

The system 10 of FIG. 1 includes an application server 12, a transaction server 14, a network gateway 16, a pair of exemplary wireless computing devices (referred to as "mobile devices" herein and in U.S. Patent Publication No. 2003/0060896) 18 and 20, and a Rapid Application Development (RAD) tool 22. The application server 12, transaction server 14, network gateway 16, and wireless computing devices 18 and 20 are analogous to the application server 70, middleware server 44, network gateway 40, and mobile devices 10 and 30 of U.S. Patent Publication No. 2003/0060896, and will thus not be described in detail.

Application server 12 is a server which hosts a number of conventional software applications 24 to which wireless computing device access is desired. In the illustrated embodiment, the applications 24 are a conventional email application and a time-tracking software package. The applications 24 receive and generate data. The role of system 10 is to present data generated by the applications 24 at wireless computing devices 18 and/or 20 and to send data generated by users of wireless computing devices 18 and/or 20 back to the applications 24. The application server 12 sends and receives this data to and from transaction server 24 over a data network 26, which may be the Internet or a private data network for example, e.g. using HTTP running on top of a standard TCP/IP stack.

Transaction server 14 is analogous to middleware server 44 of U.S. Patent Publication No. 2003/0060896, except that it has been enhanced to support the uploading of markup language documents to its secondary storage 27 and the association of these documents with groups of documents to which wireless computing device access is granted or denied as whole, as will be described below. The role of transaction server 14 is essentially twofold. First, it stores application-specific markup language documents (referred to as application definition files in the above-noted U.S. Patent publication and hereinafter), for access by wireless computing devices 18, 20 desirous of presenting data from a particular application executing at application server 12. Second, once presentation of data from application 24 at a wireless computing device 18 or 20 has begun, the transaction server acts as an intermediary for communications between the application server 12 and the wireless computing device 18 or 20. It is the former role which is of interest in the present description.

Network gateway 16 is a gateway between data network 28, which may be the Internet or a private data network for example, and a wireless network 30. In combination, wireless network 30, network gateway 16, and data network 28 facilitate communication of application data between the transaction server 14 and wireless computing devices 18 and 20.

Wireless computing devices 18 and 20 are capable of presenting data from remote applications, as described in detail in U.S. Patent Publication No. 2003/0060896. Specifically, memory at devices 18 and 20 stores virtual machine software which interprets an application definition file defining: a user interface and display format (including display flow) for an application; the format of data to be exchanged over the wireless network 30 for that application; and the format of data to be stored locally at the wireless computing devices 18 and 20. The virtual machine software instantiates objects dynamically at run time to present application data and to accept user input for transmission back to an executing application at application server 12. In many cases, the UI screens and controls presented at the wireless computing device 18 or 20 will emulate the UI screens and controls that a user would see when executing the full application of application server 12 at a desktop computer or workstation. The former screens and controls are encoded in form of XML elements and attributes within the application definition file, which dictate the behavior and UI of the wireless computing device. The application definition file is downloaded by the wireless computing device 18 or 20 from transaction server 14 for purposes of the above operation. Mobile devices 18 and 20 may be, for example, be two-way paging devices, WinCE based devices, PalmOS devices, WAP enabled mobile telephones, or the like.

Also illustrated in FIG. 1 is a rapid application development (RAD) tool 22. RAD tool 22 is a computing device 76, such as an Intel®-Processor based personal computer (PC) for example, executing RAD software which allows a developer to create application definition files for uploading to (i.e. for remotely storing at) transaction server 14. Uploading may be performed over a data network 34, which may be the Internet or a private data network for example. In some embodiments, the markup language documents which are uploaded to the transaction server 14 may not be application definition files, but rather may be master definition files, from which application definition files are created at transaction server 14, as described in U.S. Patent Publication No. 2003/0060896.

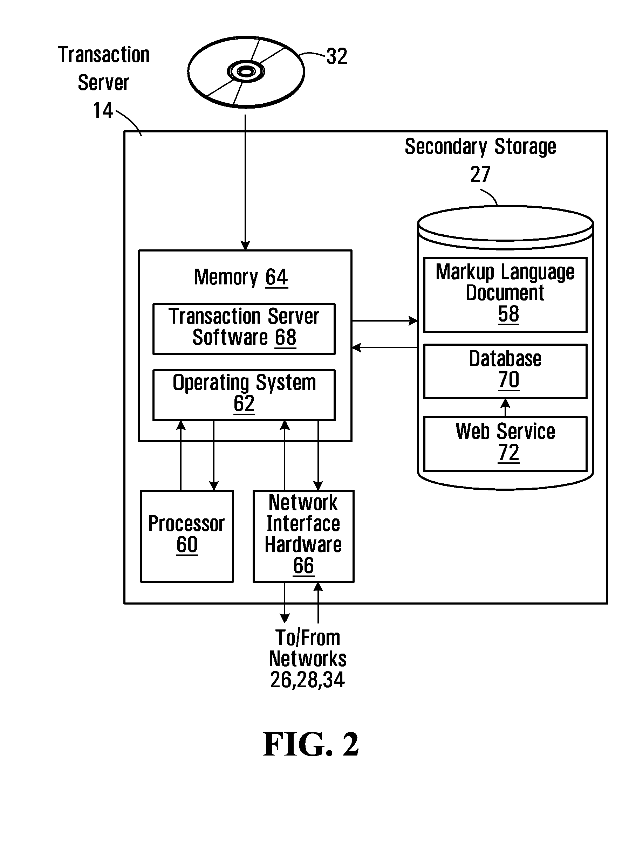

FIG. 2 is a schematic diagram illustrating transaction server 14 in greater detail. Transaction server 14 be any conventional application server, modified to function as described herein. As such, transaction server 14 includes a processor 60, in communication with a network interface 66 and memory 64. Transaction server 14 may be, for example, be a Windows NT server, a Sun Solaris server, or the like. Memory 64 of transaction server 14 stores an operating system 62 such as Windows NT or Solaris operating system.

Network interface 66 enables transaction server 14 to transmit and receive data over data networks 26, 28 and 34.

Memory 64 at transaction server 14 further stores transaction server software 68. When executed by transaction server 14, software 68 enables the transaction server 14 to compose and exchange XML data packages (messages) with wireless computing devices 18 and 20 or application server 12.

Secondary storage 27, which may be a hard drive for example, stores markup language documents 58 (e.g. master definition files or application definition files) which have been uploaded from RAD tool 22, as will be described. Each markup language document 58 may be referred to as a "mobile application" or simply "application" since it defines the manner in which an application will be presented and its functionality at the mobile device.

Secondary storage 27 also stores a database 70, which may be a SQL server database for example. The database 70 contains tables defining "mobile groups" and "application groups". A mobile group is a set of wireless computing devices which may be created by a system administrator to ease system administration for providing access to mobile applications. For example, a mobile group may be created for each department in a business enterprise (e.g. a "sales" mobile group may enumerate identifiers of mobile devices allocated to all employees in the sales department; a "marketing" mobile group may enumerate identifiers of mobile devices allocated to all employees in the marketing department; and so on). An application group is a set of applications to which access may be granted or denied as a whole. Application groups may be defined, e.g. by a system administrator, to simplify access control to applications at the transaction server 14 by mobile groups. For example, all sales-related applications may be grouped into a "sales" application group, to which each mobile device within a "sales" mobile group may be permitted access. The number of applications may differ between application groups. One application group may contain only a single application, while another may contain all of the applications (markup language documents 58) present on the transaction server 44. An application may be included in more than one application group.

Secondary storage 27 further stores a Web service 72 which is used by the RAD tool 22 for remotely accessing and updating application group information within database 70, as will be described. The Web service 72 may include a conventional Web Services Description Language (WSDL) document, business logic, and possibly other components (none of which are expressly illustrated) for achieving its objective. Web services are well known in the art.

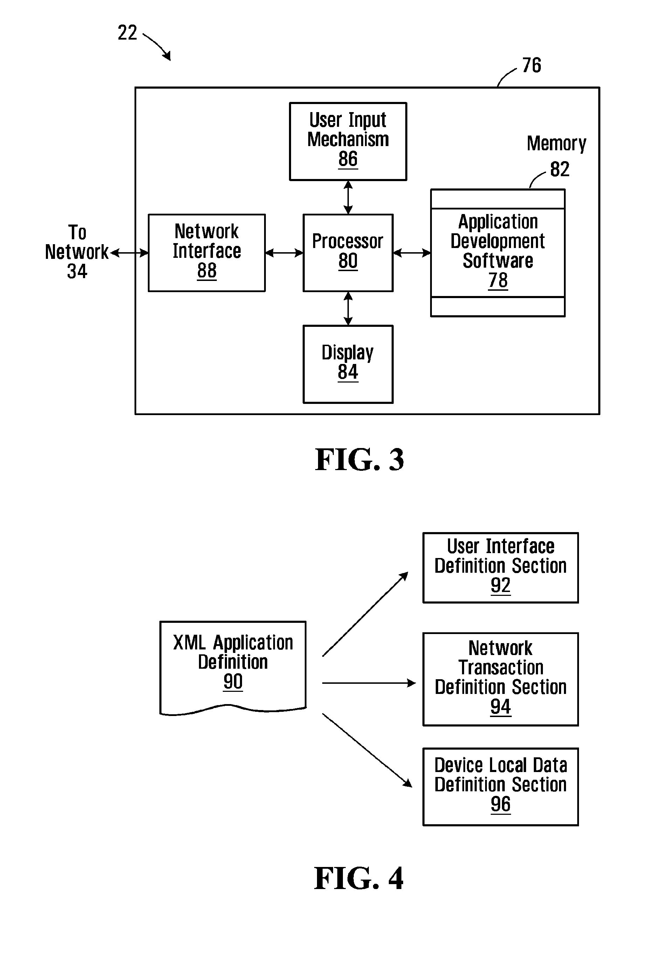

FIG. 3 schematically illustrates RAD tool 22 in greater detail. In the present embodiment the RAD tool 22 is a PC 76 executing rapid application development software 78. The PC 76 includes a processor 80 in communication with memory 82 which stores the software 78. The PC 76 further includes a display 84 and a user input mechanism (UIM) 86. The display 84 may be a Cathode Ray Tube (CRT) monitor or flat-screen display for example which is capable of displaying a GUI to a developer. The user input mechanism 86 is a mechanism such as a keyboard and/or mouse for example that is capable of generating user input representative of developer commands for developing an application. The UIM 20 could be a touch screen, in which case the display 84 and UIM 86 may be merged. The display 84 and UIM 86 are interconnected with the processor 80 by conventional interconnections, which may be indirect or may employ components which have been omitted from FIG. 3 for clarity (e.g. a video card or other components). The PC 76 further includes a network interface card 88 (e.g. an Ethernet interface) which facilitates communication by the tool 22 over network 34, e.g. for purposes of uploading a completed markup language document 58 to the transaction server 14.

The RAD software 78 provides a graphical user interface which facilitates "drag and drop" development of mobile applications. As a user develops a mobile application, the tool 22 automatically generates the corresponding XML constructs within a markup language document. When development is complete, the user instructs the tool 22 to upload the resultant markup language document to the transaction server 14 and to associate that document with one or more application groups defined at the transaction server 14. The tool 22 also allows developers to simulate mobile device execution of developed applications locally on PC 76 prior to uploading to the transaction server 44, for purposes of testing and debugging applications before deployment onto mobile devices in the field. RAD software 78 may be loaded from a machine-readable medium, such as an optical disk 32.

FIG. 4 illustrates an example format for an XML application definition file 90. As illustrated, the example application definition file 90 for a given device and application includes three components: a user interface definition section 92, specific to the user interface for the target device, and defining the format of the screen or screens for the application and how the user interacts with them; a network transactions definition section 94 defining the format of data to be exchanged with the application; and a local data definition section 96 defining the format of data to be stored locally on the mobile device by the application. Details regarding XML elements and attributes which may appear within application definition file 90 are provided in Appendix A of U.S. patent publication no. 2003/0060896. These details are understood to be non-limiting.

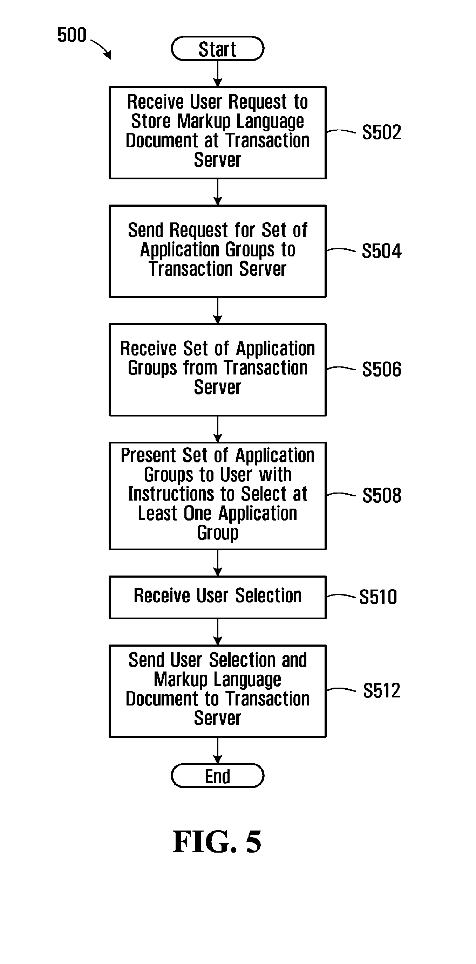

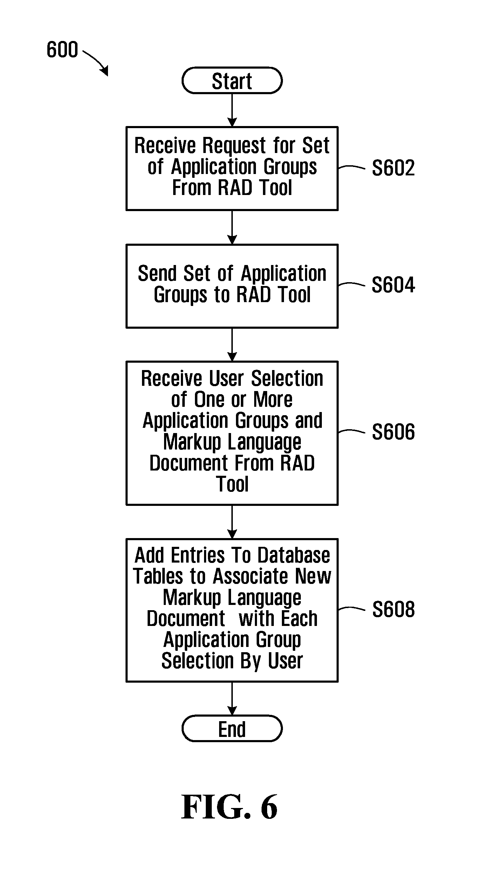

FIGS. 5 and 6 illustrate operation 500 and 600 of the present embodiment for remotely storing a markup language document 58 (such as application definition file 90) at transaction server 14 for access by wireless computing devices 18 and 20. Operation 500 occurs at RAD tool 22 while operation 600 occurs at the transaction server 14.

Referring to FIG. 5, when a developer using RAD tool 22 (FIG. 1) has finished creating a markup language document 58, the developer may specify that it is now desired to upload the markup language document to transaction server 14, e.g. by selecting appropriate controls (such as a "ready to upload" menu option) within the GUI of the tool 22 (S502). In response, the RAD tool 22 sends a request to the transaction server 14 for a list of application groups presently defined within the database 70 of the transaction server 14 (S504). In the present embodiment, requesting is achieved through invocation of a public operation defined within Web service 72 (FIG. 2).

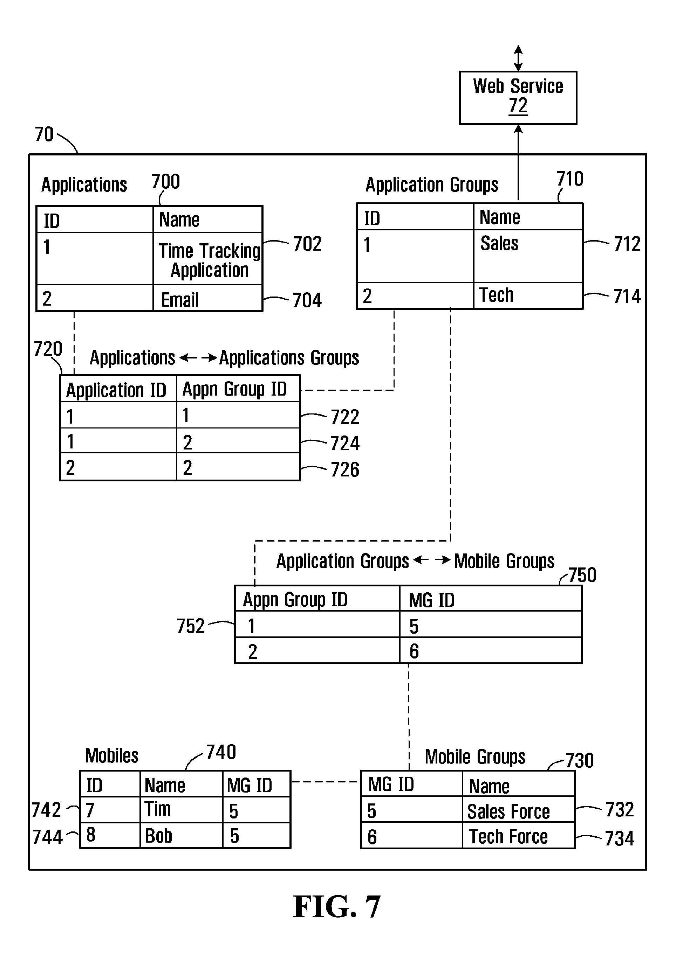

Referring to FIG. 6, upon receipt of the request for a list of application groups presently defined within the database 70 (S602), the business logic of Web service 72 compiles the list by submitting a query to the database 70 to ascertain the application groups presently defined at transaction server 14. The database 70 is illustrated in greater detail in FIG. 7. As illustrated, database 70 includes a number of tables 700, 710, 720, 730, 740 and 750.

Table 700 identifies the markup language documents 58 ("applications") presently stored at transaction server 14. Each row (a form of database entry) represents a different application. The first row 702 represents a time tracking application while the second row 704 represents an email application. Each row comprises an ID field containing a unique ID for the application as well as a Name field containing a descriptor of the application. The application table 700 also contains a field that stores the actual application definition XML (not illustrated).

Table 710 contains a row for each application group presently defined at transaction server 14. Application groups may be defined by a system administrator interacting with transaction server software 68, for example. The first row 712 defines a "Sales" group while the second row defines a "Tech" group. Each row comprises an ID field containing a unique ID for the application group as well as a Name field containing a descriptor of the application group. As will be appreciated, it is this table 710 which is accessed by the Web service 72 in order to ascertain the application groups defined at transaction server 14 (S602 of FIG. 6).

Table 720 associates applications with application groups. Each row within table 720 represents the membership of a single application in an application group. Applications are identified by their unique application ID from table 700 and application groups are identified by their unique ID from table 710. Dashed lines indicate the use of like fields in different tables. In FIG. 7, the three rows of table 720 indicate that application group ID 1 ("Sales") contains only the time tracking application while application group ID 2 ("Tech") contains both of the time tracking application and email application.

Table 730 contains a row for each mobile group presently defined at transaction server 14. As previously described, a mobile group is a set of wireless computing devices which has access to the same set of applications. Mobile groups may be defined by a system administrator interacting with transaction server software 68, for example. First row 732 defines a "Sales Force" mobile group while second row 734 defines a "Tech Force" mobile group. Each row comprises an ID field containing a unique ID for the mobile group as well as a Name field containing a descriptor of the application group.

Table 740 identifies the wireless computing devices of which transaction server 14 is presently aware and assigns each wireless computing device to a mobile group. In the present embodiment, each wireless computing device can only be a member of one mobile group. The first row 742 represents wireless computing device 18 while the second row 742 represents wireless computing device 20 (see FIG. 1). In each row, the ID field contains a unique ID for the wireless computing device, the Name field contains a descriptor of the wireless computing device (e.g. the name of a person to whom the wireless computing device has been assigned), and the MG ID field identifies the mobile group to which the wireless computing device has been assigned. Thus, the two rows 742, 744 of table 740 indicate that the "Sales Force" mobile group contains both of wireless computing devices 18 and 20.

Table 750 associates application groups with mobile groups. Each row within table 750 represents an association between an application group and a mobile group.
This association is used to determine the set of applications to which each mobile group defined at transaction server 14 shall have access. In the present embodiment, each mobile group has access to only one application group. Thus, for example, row 752 indicates that mobile group ID 5 (the "Sales Force" mobile group, i.e. wireless computing devices with IDs 7 and 8) shall have access to application group ID 1 (i.e. the "Sales" applications, which include only the time tracking application). In an alternative embodiment, it could be possible for a mobile group to have access to multiple application groups.

Referring back to FIG. 6, at S602 the business logic of Web service 72 accesses table 710 in order to ascertain the set of application groups defined at transaction server 14 (e.g. the "Names" field of each row is compiled into a list), and this set is sent back to the RAD too 22 (S604).

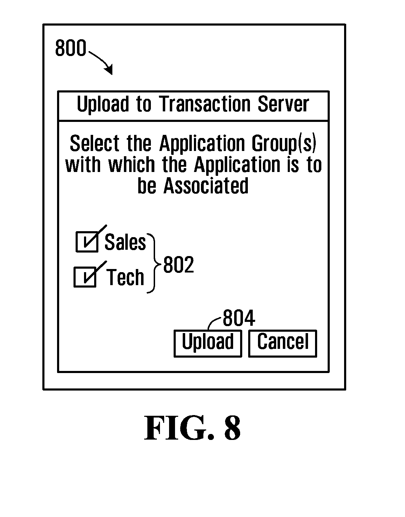

Referring to FIG. 5, the set of application groups is received from the RAD tool 22 (S506) and, in response, the RAD software 78 displays a dialog box 1800 as shown in FIG. 8 (S508). The dialog box 800 includes a set of checkboxes 802 for each of the application groups along with textual instructions for the user to select at least one application group with which the application (markup language document) is to be associated. In FIG. 8, each of the checkboxes has been selected by the user, indicating the user's desire for the markup language document to be associated with each application group. Upon selection of an "upload" button 804, the user selection is received (S510 of FIG. 5) and communicated to the transaction server 14 along with the newly created markup language documents (S512 of FIG. 5). In the present embodiment, this communication is also achieved by way of Web service 72.

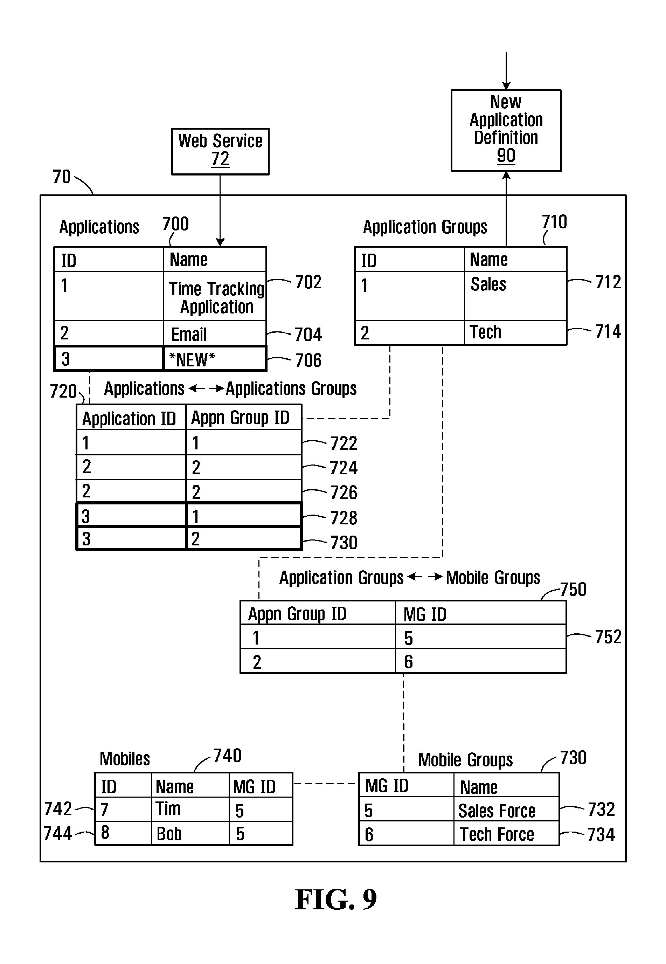

At the transaction server 14, the user selection and markup language document are received (S606 of FIG. 6) and the markup language document is stored with the other markup language documents 58 in secondary storage 27. Transaction server 14 also updates the database 70 (S608) to reflect the existence of the new application as well as its assignment to the application groups selected by the user via dialog box 800 (FIG. 8). This updating of the database is illustrated in FIG. 9.

As shown in FIG. 9, business logic of Web service 72 updates two tables within database 70. The first update is the addition of a new row 706 to table 700 to reflect the existence of the new application. A unique ID (e.g. "3") may be automatically generated, and the Name field may be set to a descriptor typed by the user at RAD tool 22. The second update is the addition of two new rows 728 and 730 to table 720 to represent the fact that the new application is has been assigned to two application groups, namely, the "Sales" application group (ID 1) and "Tech" application group (ID 2). The application definition file XML is stored in a field (not shown) in the new row 706 of table 700.

As will be appreciated by those skilled in the art, modifications to the above-described embodiment can be made without departing from the essence of the invention. For example, it is not necessary for application groups to be represented using database tables. Those skilled in the art will appreciate that there are many alternative approaches for representing application groups, such as the use of customized data structures.

It should also be appreciated that markup language documents need not be encoded using XML. Alternative markup languages (e.g. Standard Generalized Markup Language, of which XML is a subset) could be employed.

In an alternative embodiment, the RAD tool 22 could query the transaction server via the Web service for a list of mobile groups that are associated with an updated application group. This list of mobile groups could then be displayed to the RAD tool user with a checkbox for each mobile group. The user could then check off which, if any, of these mobile groups should be notified of the new application. Based on the user's selections, the RAD tool 22 could then indicate to the transaction server to push out an "Installation Request" to all mobile devices in the selected mobile groups.

If an "Installation Request" is in fact sent to one or more mobile devices, the mobile device user may be prompted with a visual display to install the new application immediately or later. If the user chooses to install it now, the application definition file could be downloaded immediately from the transaction server and installed on the mobile device.

Other modifications will be apparent to those skilled in the art and, therefore, the invention is defined in the claims.

### COPYRIGHT NOTICE

A portion of the disclosure of this patent document contains material which is subject to copyright protection. The copyright owner has no objection to the facsimile reproduction by any one of the patent document or patent disclosure, as it appears in a Patent Office patent file or records, but otherwise reserves all copyright rights whatsoever.

## Claims

1. A computer-implemented method comprising:
receiving a user request to store at a remote computing device a markup language document;
presenting to a user a set of groups, each of said groups for containing a set of markup language documents to which access by wireless computing devices is granted or denied as a whole;
receiving a user selection of one or more of said groups to which said markup language document is to be added; and
communicating said user selection and said markup language document to said remote computing device.

2. The method of claim 1 wherein said markup language document defines wireless computing device operation for presenting data from a remote application.

3. The method of claim 1 or claim 2 further comprising receiving an indication of said set of groups from said remote computing device.

4. The method of claim 3 further comprising requesting said indication of a set of groups from said remote computing device prior to said receiving said indication of said set of groups from said remote computing device.

5. The method of claim 4 wherein said requesting comprises invoking a Web service.

6. The method of any one of claims 1 to 5 wherein said markup language document defines:
a format of a user interface for the remote application at said wireless computing device;
a format of network messages for exchange of data generated by said remote application; and
a format for storing data related to said remote application at said wireless computing device.

7. A computer-implemented method comprising:
providing to a remote computing device an indication of a set of groups, each of said groups for containing a set of markup language documents to which access by wireless computing devices is granted or denied as a whole;
receiving from said remote computing device:
a markup language document;
a selection of one or more of said groups to which said markup language
document is to be added; and
adding said markup language document to each group of said selection.

8. The method of claim 7 wherein said markup language document defines wireless computing device operation for presenting data from a remote application.

9. The method of claim 7 or claim 8 wherein said adding comprises creating at least one entry in a database to associate said markup language document with said each group.

10. The method of claim 9 wherein said creating at least one entry in a database comprises creating one entry per said each group in a table of said database.

11. The method of any one of claims 7 to 10 wherein said markup language document defines:
a format of a user interface for the remote application at said wireless computing device;
a format of network messages for exchange of data generated by said remote application; and
a format for storing data related to said remote application at said wireless computing device.

12. The method of any one of claims 7 to 10 wherein said providing is performed by a Web service.

13. A machine-readable medium comprising program code executable by a computing device or system for implementing the method of any one of claims 1 to 6 and/or the method of any one of claims 7 to 12.

14. A server in a communication system comprising:
means for receiving a user request to store at a remote computing device a markup language document;
means for presenting to a user a set of groups, each of said groups for containing a set of markup language documents to which access by wireless computing devices is granted or denied as a whole;
means for receiving a user selection of one or more of said groups to which said markup language document is to be added; and
means for communicating said user selection and said markup language document to said remote computing device.

15. A wireless communication device comprising:
means for providing to a remote computing device an indication of a set of groups, each of said groups for containing a set of markup language documents to which access by wireless computing devices is granted or denied as a whole;
means for receiving from said remote computing device:
a markup language document;
a selection of one or more of said groups to which said markup language
document is to be added; and
means for adding said markup language document to each group of said selection.

## Amended claims

### Amended claims in accordance with Rule 86(2) EPC.

**1.** A computer-implemented method comprising:
receiving a user request to store at a remote computing device (14) a markup language document;
presenting to a user a set of groups, each of said groups for containing a set of markup language documents to which access by wireless computing devices (18,20) is granted or denied as a whole;
receiving a user selection of one or more of said groups to which said markup language document is to be added; and
communicating said user selection and said markup language document to said remote computing device (14).

**2.** The method of claim 1 wherein said markup language document defines wireless computing device operation for presenting data from a remote application.

**3.** The method of claim 1 or claim 2 further comprising receiving an indication of said set of groups from said remote computing device (14).

**4.** The method of claim 3 further comprising requesting said indication of a set of groups from said remote computing device (14) prior to said receiving said indication of said set of groups from said remote computing device.

**5.** The method of claim 4 wherein said requesting comprises invoking a Web service.

**6.** The method of any one of claims 1 to 5 wherein said markup language document defines:
a format of a user interface for the remote application at said wireless computing device;
a format of network messages for exchange of data generated by said remote application; and
a format for storing data related to said remote application at said wireless computing device.

**7.** A method as claimed in any preceding claim in which all of the steps of the method are carried out at the same computing device (22).

**8.** A computer-implemented method comprising:
providing to a remote computing device (22) an indication of a set of groups, each of said groups for containing a set of markup language documents to which access by wireless computing devices (18,20) is granted or denied as a whole;
receiving from said remote computing device (22):
a markup language document;
a selection of one or more of said groups to which said markup language
document is to be added; and
adding said markup language document to each group of said selection.

**9.** The method of claim 8 wherein said markup language document defines wireless computing device operation for presenting data from a remote application.

**10.** The method of claim 8 or claim 9 wherein said adding comprises creating at least one entry in a database to associate said markup language document with said each group.

**11.** The method of claim 10 wherein said creating at least one entry in a database comprises creating one entry per said each group in a table of said database.

**12.** The method of any one of claims 8 to 11 wherein said markup language document defines:
a format of a user interface for the remote application at said wireless computing device;
a format of network messages for exchange of data generated by said remote application; and
a format for storing data related to said remote application at said wireless computing device.

**13.** The method of any one of claims 8 to 11 wherein said providing is performed by a Web service.

**14.** A machine-readable medium comprising program code executable by a computing device or system for implementing the method of any one of claims 1 to 6 and/or the method of any one of claims 8 to 13.

**15.** A computing device (22) in a communication system comprising:
means for receiving a user request to store at a remote computing device (14) a markup language document;
means for presenting to a user a set of groups, each of said groups for containing a set of markup language documents to which access by wireless computing devices is granted or denied as a whole;
means for receiving a user selection of one or more of said groups to which said markup language document is to be added; and
means for communicating said user selection and said markup language document to said remote computing device.

**16.** A computing device (14) comprising:
means for providing to a remote computing device (22) an indication of a set of groups, each of said groups for containing a set of markup language documents to which access by wireless computing devices is granted or denied as a whole;
means for receiving from said remote computing device:
a markup language document;
a selection of one or more of said groups to which said markup language
document is to be added; and
means for adding said markup language document to each group of said selection.
